Europäisches Patentamt

European Patent Office

Office européen des brevets

(19)

(11) Veröffentlichungsnummer: **0 115 757**
**B2**

(12) **NEUE EUROPÄISCHE PATENTSCHRIFT**

(45) Veröffentlichungstag der neuen Patentschrift:
**30.01.91**

(51) Int. Cl.⁵: **C 21 C 5/46,** G 01 N 1/12

(21) Anmeldenummer: **83890222.9**

(22) Anmeldetag: **07.12.83**

(54) **Vorrichtung zum Wechseln von Mess- und/oder Probenahmesonden.**

(30) Priorität: **09.12.82 AT 4475/82**

(43) Veröffentlichungstag der Anmeldung:
**15.08.84 Patentblatt 84/33**

(45) Bekanntmachung des Hinweises auf die
Patenterteilung:
**29.04.87 Patenblatt 87/18**

(45) Bekanntmachung des Hinweises auf die
Entscheidung u̎ber den Einspruch:
**30.01.91 Patentblatt 91/05**

(84) Benannte Vertragsstaaten:
**BE DE FR GB IT LU NL SE**

(56) Entgegenhaltungen:
EP-A-0 092 636
DE-A-3 044 609
DE-B-2 552 270
DE-B-2 753 077
DE-B-2 753 161
DE-C-2 753 161
GB-A-1 493 720
US-A-4 058 017

(73) Patentinhaber: **VOEST-ALPINE**
**Aktiengesellschaft**
**Muldenstrasse 5**
**A-4020 Linz (AT)**

(72) Erfinder: **Fohler, Johann**
**Efeugang 10**
**A-4040 Puchenau (AT)**

(74) Vertreter: **Wolfram, Gustav, Dipl.-Ing.**
**Schwindgasse 7 P.O. Box 205**
**A-1041 Wien (AT)**

Courier Press, Leamington Spa, England.

**Beschreibung**

Die Erfindung betrifft eine Vorrichtung zum Wechseln von Meß- und/oder Probenahmesonden, die auf eine am unteren Ende einer Lanze angeordnete Halterung aufschiebbar sind, mit einem eine Sonde festklemmenden Greifer, der an einem Arm befestigt ist und mit diesem von einer Arbeitsposition unterhalb der Lanze in eine seitlich daneben befindliche Position bringbar ist, wobei am Arm oberhalb des Greifers eine Zentriereinrichtung vorgesehen ist.

Eine Vorrichtung dieser Art ist aus der DE—A—3 044 609 bekannt. Gemäß diesem Dokument ist die Zentriereinrichtung als Trichter ausgebildet, der von zwei seitlich schwenkbaren Hälften gebildet ist. Das Zentrieren der Lanze gegenüber der Sonde geschieht durch Auflaufen des unteren Lanzenendes an der Trichterwand während des Absenkens derselben.

Die Erfindung stellt sich die Aufgabe, eine Vorrichtung der eingangs beschriebenen Art zu schaffen, deren Zentriereinrichtung bei geringen Abmessungen einen relativ großen Flächenbereich beim Einfangen einer von der Ideallage abweichenden Lanze bestreichen kann, so daß die Lanze auch bei größeren Abweichungen zur vom Greifer gehaltenen Sonde geführt werden kann.

Diese Aufgabe wird erfindungsgemäß dadurch gelöst, daß die Zentriereinrichtung von zwei Fangarmen gebildet ist, die als übereinanderliegende sichelförmige Arme ausgebildet sind und aus einer geöffneten Ruheposition seitlich der Halterung in eine die Halterung fluchtend oberhalb des in Arbeitsposition befindlichen Greifers bzw. fluchtend zu der vom Greifer gehaltenen Sonde festlegende und die Halterung umschließende Fangposition bewegbar sind, u.zw. unter Verkleinerung des von den Fangarmen umschlossenen Raumquerschnittes bis auf den Querschnitt der Halterung.

Aus der DE—B—27 53 161 ist es bekannt, als Zentriereinrichtung Tastorgane vorzusehen, die die Lagekoordinaten der Halterung bzw. der auf die Halterung aufgeschobenen Sonde ermitteln, worauf in Abhängigkeit von den festgestellten Lagekoordinaten der Greifer in diese Lagekoordinaten gebracht wird. Mit dieser bekannten Vorrichtung ist es möglich, den Greifer bzw. die Sonde vertikal unterhalb einer verzogenen Lanze bzw. einer verbogenen Halterung in Stellung zu bringen bzw. die an der Halterung aufgeschobene Sonde nach Durchführung der Messung in einem metallurgischen Gefäß zu ergreifen. Diese bekannte Vorrichtung erfordert jedoch eine aufwendige Einrichtung zum Ermitteln der gewünschten Position des Greifers. Ein weiterer Nachteil ist darin zu sehen, daß der den Greifer tragende Arm der Vorrichtung bei jedem Greifvorgang eine neue Position je nach Lage der Lanze anfahren muß, wozu aufwendige Antriebe mit dazugehörigen Steuerungen notwendig sind, die erfindungsgemäß vermieden werden.

In übringen ist eine Zentriervorrichtung zusammen mit einer speziellen Greifvorrichtung auch Gegenstand der europäischen Parallelanmeldung EP—A1—133 653.

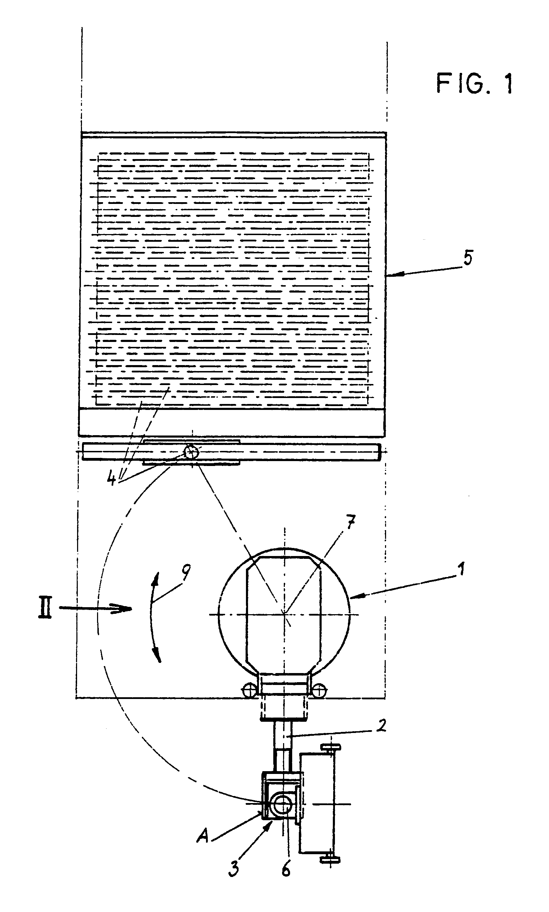

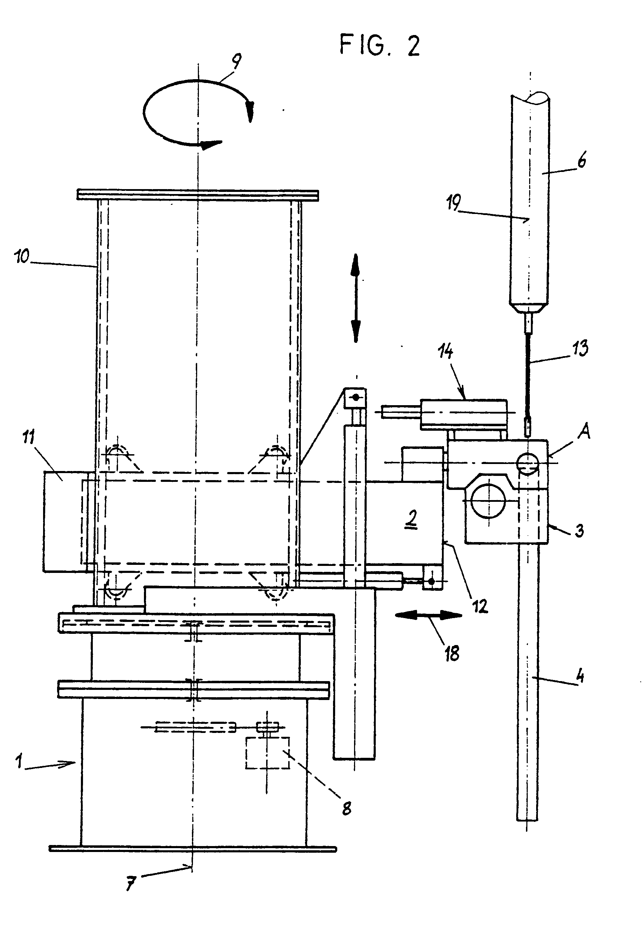

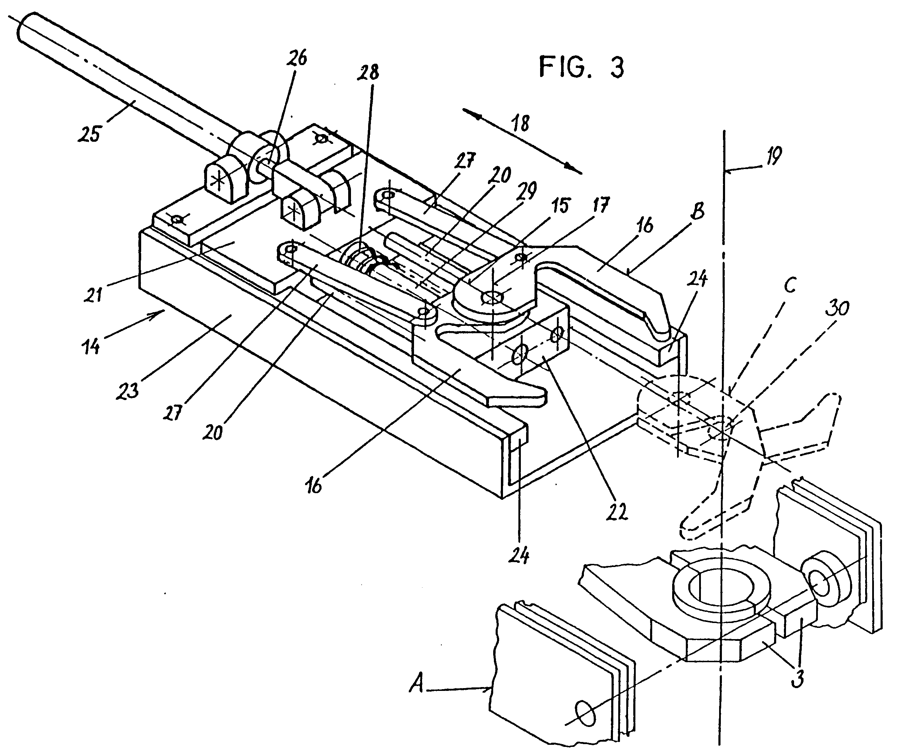

Die Erfindung ist nachfolgend anhand der Zeichnung an einem Ausführungsbeispiel näher erläutert, wobei Fig. 1 eine Draufsicht auf eine in einem Stahlwerk aufgestellte Vorrichtung zum Wechseln von Meß- und/oder Probenahmesonden veranschaulicht. Fig. 2 zeigt eine Ansicht in Richtung des Pfeiles II der Fig. 1 und Fig. 3 einen Schrägriß einer Zentriereinrichtung.

Mit 1 ist ein Sondenmanipulator bezeichnet, der einen an einem Arm 2 befestigten Greifer 3 zur Aufnahme einer Sonde 4 aus einem Magazin 5 und Überbringen dieser Sonde 4 zu einer Lanze 6 bzw. zum Abnehmen der Sonde 4 von der Lanze 6 aufweist. Der Manipulator weist eine um eine vertikale Achse 7 mittels eines Antriebes 8 in Richtung des Doppelpfeiles 9 schwenkbare Säule 10 auf, an der ein Wagen 11 in vertikaler Richtung verschiebbar gelagert ist. Dieser Wagen 11 dient zur Aufnahme des in horizontaler Richtung verschiebbaren Armes 2, an dessen freiem Ende 12 der die Sonde 4 festklemmende Greifer 3 montiert ist. Wie aus Fig. 1 ersichtlich ist, kann die Sonde 4 mittels des Greifers 3 dem Magazin 5 durch Schwenken um die Achse 7 entnommen werden und in eine Position fluchtend unterhalb der Lanze 6 gebracht werden. Durch Absenken der Lanze 6 wird die Sonde auf die an der Lanze montierte Halterung, die als Haltestab 13 ausgebildet ist, aufgeschoben. Zum Entfernen der Sonde 4 von der Lanze 6 wird nach Durchführen der Messung bzw. nach Probenahme die Sonde 4 mittels des Greifers 3 festgeklemmt und die Lanze 6 nach oben gezogen, wodurch die Sonde 4 vom Haltestab 13 abgezogen wird, worauf die Sonde 4 mittels des Greifers 3 zu einer Abgabestelle gebracht wird.

Durch einseitige Temperaturbeaufschlagung der Lanze 6 innerhalb des metallurgischen Gefäßes kann es zu einem Verziehen der Lanze 6 kommen, so daß nach einer gewissen Betriebszeit die an der Lanze 6 vorgesehene Sondenhalterung 13 nicht mehr genau fluchtend über der mittels des in Arbeitsposition A geschwenkten Greifers 3 in Aufschiebeposition gehaltenen Sonde 4 steht. Weiters ist es möglich, daß es beim Durchführen des Meßvorganges bzw. bei der Probeentnahme zu einem Auffahren der Sonde 4 auf noch nicht aufgeschmolzenes Gut kommt, wodurch der Haltestab 13 verbogen werden kann. Ein Verbiegen der Halterung ist auch durch Kontakt der Sonde 4 mit auf dem schmelzflüssigen Gut schwimmenden Schlackenteilen möglich.

Um trotzdem das Aufschieben der Sonde 4 auf den Haltestab sicherstellen zu können, ist am Greifer 3 oberhalb desselben eine Zentriereinrichtung 14 vorgesehen. Diese Zentriereinrichtung weist, wie aus Fig. 3 ersichtlich ist, zwei sichelförmig gestaltete und zur Mittelachse 15 symmetrisch angeordnete Fangarme 16 auf, die um eine in der Mittelachse 15 liegende Schwenkachse 17 aus einer in Fig. 3 mit vollen Linien dargestellten Ruheposition B in eine in Fig. 3 mit strichlierten Linien dargestellte Fangposition C schwenkbar sind.

Die für die beiden übereinanderliegenden Fangarme 16 gemeinsame Schwenkachse 17 ist in einem in horizontaler Richtung 18 senkrecht zur Lanzenachse 19 entlang von Führungssäulen 20, die an einem ebenfalls horizontal und normal zur Achse 19 der Lanze 6 verschiebbaren Schlitten 21 befestigt sind, bewegbaren Führungsklotz 22 vorgesehen. Zur Horizontalführung des Schlittens 21 dienen in einem Rahmen 23 angeordnete Führungen 24, die parallel zu den Führungssäulen 20 liegen.

Ein Linearantrieb, der als Druckmittelzylinder 25 ausgebildet ist, ist einerseits am Rahmen 23 und andererseits — mit seiner Kolbenstange 26 — am Schlitten 21 angelenkt. Die Fangarme 16 sind mittels an ihnen im Abstand von der Schwenkachse 17 angelenkter Laschen 27 mit dem Schlitten 21 verbunden.

Zwischen dem Schlitten 21 und dem Führungsklotz 22 ist eine Schraubenfeder 25 gespannt, zu deren Lagesicherung ein sich parallel zu den Führungen 24 bzw. Führungssäulen 20 erstreckender Bolzen 29 dient.

Die Funktion der Einrichtung ist folgende:

Wird der Linearantrieb 25 beaufschlagt, so wird der in Ruheposition befindliche Schlitten 21 entlang der Führungen 24 in Richtung zur Lanze 6 verschoben, wobei der Führungsklotz 22, der durch die Schraubenfeder 28 in Distanz zum Schlitten 21 gehalten wird, synchron mitverschoben wird. Dadurch gelangen die Fangarme 16 im offenen Zustand in eine Position oberhalb des Greifers 3.

Die Bewegung des Führungsklotzes 22 wird, sobald er sich am vorderen Ende des Rahmens 23 befindet, durch einen nicht dargestellten Anschlag gestoppt. Der Schlitten 21 bewegt sich jedoch vom Linearantrieb 25 angetrieben weiter, so daß die Distanz zwischen Schlitten 21 und Führungsklotz 22 unter Zusammendrückung der Schraubenfeder 28 verringert wird. Infolge der zwischen dem Schlitten 21 und dem Führungsklotz 22 stattfindenden Relativbewegung werden die Fangarme 16 mittels der Laschen 27 in Fangposition C bewegt.

Wie aus Fig. 3 ersichtlich ist, ist die Form der Fangarme 15 so ausgebildet, daß die einander übergreifenden Fangarme 16 in Fangposition C einen dem Querschnitt des zu fangenden Teiles angepaßten freien Raum 30 umschließen. Gemäß dem dargestellten Ausführungsbeispiel ist dieser freie Raum etwa kreisförmig und entspricht hinsichtlich seines Durchmessers dem Durchmesser des an der Lanze 6 vorgesehenen Haltestabes 13 für die Sonden 4.

Während des Aufschiebens der Sonde 4 auf den Haltestab 13 wird ab einer bestimmten Höhe der Aufschiebebewegung der Linearantrieb 25 zur Einleitung der Rückzugsbewegung der Pangarme 15 beaufschlagt. Dabei bewegt sich zunächst lediglich der Schlitten 21 entlang der Führungen 24 von der Achse 19 der Lanze 6 weg, wogegen der Führungsklotz infolge der Spannkraft der Feder 25 zunächst in seiner vordersten Position verbleibt. Während dieses Zurückbewegens des Schlitten 21 werden die Fangarme 16 geöffnet. Ist das Ende des Federweges durch den Schlitten 21 erreicht, bewegen sich der Schlitten 21 und der Führungsklotz 22 synchron bis zum Hubende des Linearantriebes 25 zurück, wodurch die Fangarme 16 in die Position B zurückgezogen werden und den Raum oberhalb des Greifers nicht mehr beschränken.

## Patentanspruch

Vorrichtung zum Wechseln von Meß- und/oder Probenahmesonden (4), die auf eine am unteren Ende einer Lanze (6) angeordnete Halterung (13) aufschiebbar sind, mit einem eine Sonde (4) festklemmenden Greifer (3), der an einem Arm (2) befestigt ist und mit diesem von einer Arbeitsposition (A) unterhalb der Lanze (6) in eine seitlich daneben befindliche Position bringbar ist, wobei am Arm (2) oberhalb des Greifers )3) eine Zentriereinrichtung (14) vorgesehen ist, dadurch gekennzeichnet, daß die Zentriereinrichtung (14) von zwei Fangarmen (16) gebildet ist, die als übereinanderliegende sichelförmige Arme ausgebildet sind und aus einer geöffneten Ruheposition (B) seitlich der Halterung (13) in eine die Halterung (13) fluchtend oberhalb des in Arbeitsposition (A) befindlichen Greifers (3) bzw. fluchtend zu der vom Greifer gehaltenen Sonde festlegende und die Halterung (13) umschließende Fangposition (C) bewegbar sind, u.zw. unter Verkleinerung des von den Fangarmen umschlossenen Raumquerschnittes bis auf den Querschnitt (30) der Halterung (13).

## Revendication

Dispositif pour changer des sondes de mesure et/ou de prélèvement d'échantillons (4) qui peuvent être emmanchées sur un support (13) disposé à l'extrémité inférieure d'une lance (6), comprenant une pince (3) qui serre une sonde (4) et qui est attachée à un bras (2) et peut être amenée d'une position de travail (A) située au-dessous de la lance (6) à une position qui se trouve latéralement à côté de celle-ci, cependant qu'un dispositif de centrage (14) est prévu sur le bras (2) au-dessus de la pince (3), caractérisé en ce que le dispositif de centrage (14) est constitué de deux bras de préhension (16) qui sont formés comme des bras en forme de faucille disposés l'un au-dessus de l'autre et peuvent être amenés d'une position de repos ouverte (B) située latéralement au support (13) à une position de préhension (C) dans laquelle il immobilise le support (13) dans l'alignement au-dessus de la pince (3) située dans la position de travail (A) et dans l'alignement avec la sonde maintenue par la pince et il embrace le support (13), avec rétrécissement de la section d'espace entouré par les bras de préhension jusqu'à la section (30) du support (13).

**Claim**

An arrangement for exchanging measuring and/or sampling probes (4) capable of being slipped onto a holding means (13) arranged on the lower end of a lance (6), comprising a grab (3) clamping a probe (4), which grab is fastened to an arm (2) and is movable with the same from an operation position (A) below the lance (6) into a position laterally therebeside, a centering means (14) being provided on the arm (2) above the grab (3), characterized in that the centering means (14) is formed by two catch arms (16) designed as superposed sickle-shaped arms and movable from an opened resting position (B) laterally beside the holding means (13) into a catch position (C) immobilizing the holding means (13) in alignment above the grab (3) being in the operation position (A) and in alignment with the probe held by the grab and embracing the holding means (13), by reducing the cross section of the space enclosed by the catch arms to the cross section (30) of the holding means (13).

FIG. 1

FIG. 2

FIG. 3